# FASCICULE DE BREVET EUROPEEN

(11) **EP 2 598 952 B1**
(45) Date de publication et mention de la délivrance du brevet: **15.11.2017**
(21) Numéro de dépôt: 11718751.8
(22) Date de dépôt: 11.05.2011
(51) Int. Cl.: G04D 3/00, G04B 13/00, G04B 13/02, H02K 49/10, H02N 11/00

(54) **TRANSMISSION DE FORCE SANS CONTACT DANS UN MOUVEMENT D'HORLOGERIE**
KONTAKTLOSE KRAFTÜBERTRAGUNG IN EINEM UHRWERK
CONTACTLESS FORCE TRANSMISSION IN A CLOCK MOVEMENT

(30) Priorité: 30.07.2010 CH 12502010
(43) Date de publication de la demande: 05.06.2013
(73) Titulaire: The Swatch Group Research and Development Ltd., 2074 Marin (CH)
(72) Inventeur: HESSLER, Thierry, CH-2024 St-Aubin (CH); WILLEMIN, Michel, CH-2515 Prêles (CH); HELFER, Jean-Luc, CH-2502 Bienne (CH); GUEISSAZ, François, CH-2075 Wavre (CH); CONUS, Thierry, CH-2543 Lengnau (CH)
(74) Mandataire: Surmely, Gérard
(86) Numéro de dépôt international: PCT/EP2011/057578
(87) Numéro de publication internationale: WO 2012/013374

(56) Documents cités:
- CH-B5- 598 632
- FR-A- 1 276 734
- US-A- 3 058 294
- US-A- 3 451 280
- US-A- 3 629 624
- US-A- 3 652 955
- US-A- 3 695 035
- US-A- 3 860 844

## Description

### Domaine de l'invention

L'invention concerne un procédé de réalisation d'une transmission sans contact dans un mouvement d'horlogerie.

### Arrière plan de l'invention

L'invention concerne le domaine de l'horlogerie, et plus précisément le domaine des mouvements mécaniques.

Le comportement aux frottements des composants d'un mécanisme d'horlogerie a une influence directe sur son dimensionnement, sur ses performances, sur la qualité de son fonctionnement, la régularité de sa marche, et sur sa longévité.

Les frottements se traduisent tout d'abord par une perte de rendement énergétique, ce qui oblige à surdimensionner, non seulement les moyens de stockage d'énergie tels que ressorts de barillet ou similaires, mais aussi les moyens de transmission de cette énergie dans l'ensemble du mécanisme, ce qui se traduit par des sections et diamètres supérieurs à ce qui est nécessaire pour le fonctionnement de la pièce d'horlogerie. Naturellement l'autonomie de la pièce d'horlogerie est d'autant plus affectée que les frottements sont importants, et la réserve de marche est alors plus faible.

L'usure concerne tous les composants soumis à des frottements, à des efforts d'impact, ou encore à des pressions de contact élevées. L'usure est un problème récurrent, qui se traduit à la longue par une détérioration des qualités d'un mouvement, en termes d'isochronisme notamment. Si l'usure concerne toutes les pièces mobiles d'un mouvement, elle concerne au premier chef les composants des mécanismes d'échappement et des ensembles réglants, ainsi que les dentures des roues et pignons, et les axes et pivots.

Il est connu de minimiser les frottements par des traitements de surface adaptés. En effet, les possibilités de lubrification sont très limitées dans le domaine de l'horlogerie, et ne peuvent pas être exploitées de manière optimale pour une action à long terme.

Il a encore été imaginé de minimiser les contacts proprement dits, soit en les supprimant, soit en diminuant la durée des contacts, ou encore en diminuant les pressions de contact.

La suppression des contacts a été tentée, dans le domaine de la transmission de puissance, avec des solutions de type magnétique, avec l'entraînement en pivotement d'un premier mobile récepteur comportant des surfaces magnétisées par un deuxième mobile émetteur entraîné par une source d'énergie et comportant également des surfaces magnétisées, le premier et le deuxième mobile venant à proximité l'un de l'autre, soit dans des plans voisins comme dans les documents de brevets CN2006 1011 2953.2 au nom de Li Lingqun, soit de façon sensiblement tangentielle comme dans le même document, ou encore selon des géométrie plus complexes, spiralées comme dans le document de brevet JP 0130 332 au nom de Shoei Engineering Co Ltd.

La combinaison de dentures et de surfaces magnétiques est décrite, pour des applications de transmission ou de machines électromécaniques de puissance, par les documents GB 2 397 180 au nom de Newman et CN 2 446 326 au nom de Qian Hui. Dans ce dernier document chaque dent d'une roue comporte, de part et d'autre d'une radiale, deux secteurs de polarité différente, qui sont agencés pour s'opposer à des secteurs similaires de même polarité d'une roue antagoniste, avec laquelle la denture interfère.

En ce qui concerne les paliers, il est connu des paliers à lévitation magnétique, radialement dans le document CN 2 041 825 au nom de Nantong Industry and Commerce, ou encore à la fois axialement et radialement comme dans le document de brevet JP 7 325 165 au nom de Seikosha KK.

Le domaine de l'horlogerie connaît, depuis le XVIIème siècle, par exemple avec les réalisations d'Adam Kochanski, des butées magnétiques pour limiter la course du balancier, rendant inutile un ressort spiral.

Toutefois, dans ces différentes approches, l'utilisation d'aimants massifs se traduit par un encombrement conséquent, et par une complexité dans la réalisation de chaque composant.

Le document US 3 652 955 au nom de Cruger, General Time Corporation, décrit un oscillateur électromécanique dans lequel une lame encastrée oscillante porte, à son extrémité libre, des surfaces polarisées mobiles entre des électrodes à polarité variable en raison de leur liaison avec un champ électrique alternatif.

### Résumé de l'invention

Le but de la présente invention est de pallier tout ou partie les inconvénients cités précédemment, en proposant un procédé de réalisation de composants d'un mouvement d'horlogerie, ou de transformation de tels composants, dans le but de limiter ou de supprimer le contact entre pièces antagonistes, tout en assurant leur fonctionnalité.

A cet effet, l'invention concerne un procédé de réalisation d'une transmission sans contact dans un mouvement d'horlogerie, selon la revendication 1.

L'invention apporte l'avantage de pouvoir conserver le dimensionnement de chaque composant, l'épaisseur de la couche mince étant suffisamment faible pour ne pas modifier la cinématique.

La combinaison d'un agencement particulier des surfaces antagonistes pour maîtriser leur frottement, par répulsion entre elles, avec une couche tribologique, permet une bonne maîtrise des frottements et du rendement du mécanisme, ainsi que l'obtention d'une usure minimale en cas de contact.

D'autres particularités et avantages ressortiront clairement de la description qui en est faite ci-après, à titre indicatif et nullement limitatif.

### Description détaillée des modes de réalisations préférés

L'invention concerne le domaine de l'horlogerie, et plus précisément le domaine des mouvements mécaniques.

A cet effet, l'invention concerne un procédé de réalisation d'une transmission sans contact, dans un mouvement d'horlogerie.

On réalise ou on transforme au moins un couple de surfaces antagonistes de coopération.

Ces surfaces antagonistes peuvent être deux surfaces d'un même composant. Selon l'invention, ces surfaces antagonistes appartiennent à deux composants d'un couple de composants antagonistes du mouvement d'horlogerie, dont l'une des surfaces entraîne l'autre ou prend appui sur elle, par l'application d'un traitement superficiel ou dans la masse sur chacune des surfaces antagonistes composant ce couple pour lui conférer une charge électrostatique de même polarisation, de façon à ce qu'elle tende à repousser l'autre surface antagoniste du couple quand elles sont approchées l'une de l'autre.

Dans une réalisation magnétique voisine de l'invention, on réalise ou on transforme au moins un couple de surfaces antagonistes de coopération d'un même composant ou d'un couple de composants antagonistes dudit mouvement d'horlogerie, dont l'une desdites surfaces entraîne l'autre ou prend appui sur elle, par l'application d'un traitement superficiel ou dans la masse sur chacune desdites surfaces antagonistes composant ledit couple pour lui conférer une charge magnétique, de façon à ce qu'elle tende à repousser l'autre dite surface antagoniste dudit couple quand elles sont approchées l'une de l'autre.

Lors de la mise en oeuvre de ce procédé, on diminue ou on élimine les frottements entre les composants constituant ce couple de composants antagonistes. Ces derniers coopèrent ensemble, au niveau d'au moins une surface de coopération de l'un et d'au moins une surface de coopération antagoniste de l'autre.

En somme, on assure la protection, par diminution des frottements, de ce couple de composants antagonistes, et aussi du mouvement d'horlogerie tout entier.

Ce procédé est applicable, ou bien lors de la réalisation des composants, ou bien lors d'une transformation de ces composants. On emploiera ci-après le terme réalisation indifféremment pour l'un ou l'autre cas.

Par exemple, dans des applications préférées et nullement limitatives, les couples de composants antagonistes peuvent consister en :
- deux roues dentées ;
- deux cames ;
- une came et une bascule ;
- deux bascules ;
- un axe ou arbre et un pivot ;
- une ancre et une roue d'échappement,
- une fourchette d'ancre et un plateau de balancier ;
- une roue et un fouet ;
- une came coeur et un marteau ;
- une étoile et un doigt.

Les couples de surfaces antagonistes ou de composants antagonistes peuvent consister en deux spires consécutives d'un même ressort, notamment d'un ressort-spiral ou d'un ressort de barillet.

Quand on soumet un tel couple de surfaces antagonistes à un traitement superficiel, on recouvre chaque surface antagoniste d'au moins une couche mince, dite couche d'activation, de particules chargées électriquement dans le cas de l'invention, ou magnétiquement dans une réalisation voisine de l'invention, de même polarisation l'une que l'autre, ou respectivement de même aimantation, de façon à ce que ces surfaces antagonistes de coopération tendent à se repousser quand elles sont approchées l'une de l'autre, ou bien on crée au moins une telle couche mince d'activation.

Quand on soumet un tel couple de surfaces antagonistes à un traitement dans la masse, on soumet une partie de la structure de chaque composant concerné à un traitement d'électrisation dans le cadre de l'invention, ou/et d'aimantation dans une réalisation voisine de l'invention, au niveau d'au moins une couche mince d'activation, comportant après ce traitement des particules chargées électriquement dans le cadre de l'invention, ou respectivement magnétiquement dans une réalisation voisine de l'invention, de même polarisation l'une que l'autre, ou respectivement de même aimantation, de façon à ce que ces surfaces antagonistes de coopération tendent à se repousser quand elles sont approchées l'une de l'autre, ou bien on crée au moins une telle couche mince d'activation.

Naturellement, selon l'invention, une des surfaces antagonistes peut être traitée en surface tandis que l'autre surface antagoniste est traitée dans la masse, ou bien les deux surfaces antagonistes peuvent être traitées en surface, ou bien les deux surfaces antagonistes peuvent être traitées dans la masse.

La notion de particules chargées s'applique aussi à la croissance d'un cristal fait d'au moins deux éléments, lesquels ne sont pas chargés séparément, mais se chargent au moment de la croissance cristalline. Elle s'applique aussi à un dépôt sous champ de particules chargées avec une activation ou fixation thermique.

Cette couche d'activation peut être déjà active comme en particulier une couche aimantée, ou activable c'est-à-dire activée après sa création ou son dépôt, notamment pour des électrets comme on le verra plus loin.

De façon particulière, ce traitement superficiel consiste à créer ou déposer sur chacune de ces surfaces antagonistes de coopération une pluralité de couches minces de particules chargées électriquement selon l'invention, ou/et magnétiquement dans une réalisation voisine de l'invention, deux à deux de même polarisation, ou respectivement de même aimantation, de façon à ce que ces surfaces antagonistes de coopération tendent à se repousser quand elles sont approchées l'une de l'autre.

De façon particulière et similaire, le traitement dans la masse consiste à créer de telles couches minces dans l'épaisseur d'un composant. Ce traitement dans la masse consiste à soumettre une partie de la structure de chaque composant concerné à un traitement d'électrisation selon l'invention, ou/et d'aimantation dans une réalisation voisine de l'invention, au niveau d'une pluralité de couches minces, comportant après ce traitement des particules chargées électriquement, ou respectivement magnétiquement, deux à deux de même polarisation, ou respectivement de même aimantation, de façon à ce que lesdites surfaces antagonistes de coopération tendent à se repousser quand elles sont approchées l'une de l'autre.

Si le mode de réalisation préféré de l'invention est celui mettant en jeu un traitement superficiel de tout ou partie des surfaces antagonistes de coopération, on comprend qu'un traitement dans la masse peut aussi apporter les effets recherchés. Toutefois, un traitement dans la masse n'est pas toujours possible en raison d'interférences non désirées avec d'autres composants d'un mouvement horloger, c'est pourquoi le cas du traitement superficiel est plus particulièrement exposé ici. Ce traitement superficiel peut concerner une ou plusieurs couches périphériques du composant concerné. Un traitement multi-couches peut permettre de générer une force plus homogène, plus stable dans le temps, et moins dépendante de petits changements locaux de densité de charge ou d'aimantation.

On comprend donc que, si une couche qualifiée de mince est une solution avantageuse car directement compatible avec des composants existants, dans l'exploitation de leur intervalle de tolérance, cette couche mince est une solution préférée, mais non la seule utilisable pour la mise en oeuvre de l'invention.

La couche mince est, selon son mode d'élaboration, une couche chargée électriquement de façon à faire l'objet d'une force électrique dite alors électret dans le cadre de l'invention, ou une couche mince aimantée de façon à faire l'objet d'une force magnétique dans une réalisation voisine de l'invention, ou encore une couche mince chargée à la fois électriquement et magnétiquement. Quand la couche mince est chargée magnétiquement, elle est de préférence réalisée sous la forme d'un matériau magnétique dur, tel que le néodyme-fer-bore ou similaire. On entend par charge magnétique un dipôle magnétique, qui n'est pas ponctuel, même s'il peut être de dimensions réduites.

Dans la mise en oeuvre de l'invention, on active au moins une telle couche mince de façon à lui conférer la polarisation requise dans le cadre de l'invention, ou respectivement l'aimantation requise dans une réalisation voisine de l'invention. Dans le cas d'un électret, on soumet la couche ou le composant à une électrisation sous un champ électrique élevé, éventuellement combiné à un traitement thermique, ou/et à un contact avec un liquide.

En ce qui concerne les couches magnétiques dans une réalisation voisine de l'invention, certaines sont déjà polarisées à la fin du procédé de déposition sur les surfaces de coopération, et d'autres doivent l'être après la fin de ce procédé. Un mode particulier de polarisation consiste à soumettre le composant à un champ laser, ce qui crée une perturbation autorisant l'orientation facile des grains sous l'action d'un champ magnétique externe.

Dans une réalisation particulière, on active au moins une telle couche mince après déposition sur la surface de coopération de façon à lui conférer la polarisation requise, ou respectivement l'aimantation.

En ce qui concerne cette activation, l'homme de l'art peut se référer à des enseignements relatifs aux industries des capteurs, des actionneurs, des disques-mémoire, ou encore des antennes, où des couches minces sont utilisées, et où leur traitement a fait l'objet de publications qui sont ici directement applicables.

Pour les couches minces chargées électriquement ou électrets, on citera notamment les articles, citant notamment des activations de type « Corona »:
- « Non-contact electrostatic micro-bearing using polymer electret », de MM. Yukinori Tsurumi, Yuji Suzuki et Nobuhide Kasagi, Department of Mechanical Engineering, The University of Tokyo, paru dans « Proc. IEEE Int. Conf. MEMS 2008, Tucson, 2008, pp 511-514 »;
- « Low-resonant-frequency micro electret generator for energy harvesting application », de MM. M. Edamoto, Y. Suzuki, N. Kasagi, Department of Mechanical Engineering, The University of Tokyo,
   MM. K. Kashiwagi, Y. Morizawa, Research Center, Asahi Glass Corporation, Kanagawa, MM. T. Yokohama, T. Seki, et M. Oba, Core Technology Center, Omron Corporation, Kyoto, paru sous la référence « 978-1-4244-2978-3/09 ©2009 IEEE, pp 1059-1062»;
- « A 2D electret-based resonant micro energy harvester », de MM. U. Bartsch, J. Gaspar, et O. Paul, Department of Microsystems Engineering (IMTEK), University of Freiburg Germany, paru sous la référence "978-1-4244-2978-3/09 ©2009 IEEE, pp 1043-1046 ».

Pour les couches minces chargées magnétiquement, on citera notamment les articles :
- « High performance thin film magnets », de MM. S. Fähler, V. Neu, M. Weisheit, U. Hannemann, S. Leinert, A. Singh, A. Kwon, S. Melcher, B. Holzapfel, et L. Schultz, IFW Dresden, paru sous la référence " 18th Workshop on High Performance Magnets and their Applications, Annecy France 2004, pp 566-576";
- "Exchange coupled nanocomposite hard magnetic alloys", de MM. I. Betancourt et H.A. Davies, Department of Engineering Materials, University of Sheffield UK, paru sous la référence "Materials Science and Technology, 2010, Vol 26, No 1, pp 5-19, © 2010 Institute of Materials, Minerals and Mining.

De façon préférée, dans un premier mode de réalisation où la couche mince d'électret est chargée électriquement (implantations d'ions ou d'électrons, procédé « Corona », par contact liquide, ou autre), cette couche mince est agencée pour générer une densité surfacique de charge de l'ordre de 10 mC/m², et avantageusement dans une fourchette de 0,1 à 50 mC/m², cette valeur de 10 mC/m² permettant par exemple d'obtenir une force électrostatique supérieure ou égale à 10 µN/mm² pour une distance supérieure ou égale à 100 µm.

Dans le cas des électrets, la couche d'activation est polarisée électriquement, et peut être constituée de SiO₂, de As₂S₃, de polymères comme le PET, de polymères fluorés comme le téflon, du « CYTOP ® » de « Asahi Glass ® », du parylène « HT ® » de « Specialty Coating Systems », lequel parylène peut être déposé de manière conforme à la surface à la température ambiante, ou similaire.

Dans une réalisation particulière, au moins une couche mince est un électret SiO₂ sur une base silicium.

La réalisation d'une couche de SiO₂ peut être faite par une oxydation de silicium au four sous atmosphère d'oxygène, ou sous la forme d'un dépôt.

Une couche d'activation chargée peut, selon le cas, soit être enfermée entre deux couches métalliques chacune d'une épaisseur de 10 à 1000 nm, soit disposée en périphérie du composant, par-dessus une couche métallique unique d'une épaisseur de 10 à 1000 nm, l'épaisseur totale de la couche d'activation et de la ou des couches métalliques étant dans le deux cas de préférence inférieure à 20 µm. Le composant peut également être lui-même conducteur.

La charge électrostatique peut être transférée vers une couche de polysilicium enterrée dans un isolant comme le SiO₂, de façon similaire aux mémoires électroniques type EEPROM. Des îlots de taille arbitraire peuvent être formés, selon un procédé photolithographique, tel qu'utilisé en micro-électronique, ou similaire.

Dans une réalisation voisine de l'invention où la couche mince est aimantée, le traitement superficiel ou dans la masse consiste de préférence à créer ou déposer sur la surface de coopération ou/et sur la surface de coopération antagoniste, et de préférence sur l'une et l'autre, au moins une couche mince magnétiquement active ayant un champ rémanent Br de l'ordre de 1 T, notamment supérieur ou égal à 1T, et une excitation coercitive Hc de plusieurs centaines de kA/m, notamment supérieure ou égale à 100 kA/m, et la polarisation est, selon le cas, effectuée soit parallèlement au plan, soit perpendiculairement au plan. Un effet de couple tangentiel a l'effet de répulsion recherché dans la mise en oeuvre de l'invention. Pour une polarisation perpendiculaire au plan, il y a répulsion si les aimants sont opposés, ou attraction dans le cas contraire. Pour une polarisation parallèle au plan, il y a répulsion ainsi qu'un couple si les aimants sont dans le même sens, ou attraction s'ils sont en sens opposé. Dans le cas des aimants, la couche peut être constituée de matériaux magnétiques tels que FePt, ou/et CoPt, ou/et SmCo, ou/et NdFeB, qui peuvent être déposés tel quel ou sous champ ou polarisés ultérieurement, et notamment par électrodéposition, par déposition physique (pulvérisation triode, laser pulsé, ou autre) ou autre et, soit directement aimantée lors du dépôt, soit aimantée par la suite, par exemple par un recuit thermique ou sous un faisceau laser sous champ, ou autre. La polarisation peut être principalement dans le plan de la couche ou perpendiculairement à celle-ci.

Dans un mode de réalisation de mise en oeuvre plus complexe, voisin à celui de l'invention, la couche mince est chargée à la fois électriquement et magnétiquement.

La couche d'activation ou activée électriquement ou/et magnétiquement peut, dans une variante avantageuse, être recouverte d'une couche tribologique. Cette version est intéressante dans le cas où l'on n'élimine pas complètement le contact, mais où on le maintient à un niveau très faible d'effort de contact. Notamment dans le cas d'un mécanisme d'échappement d'horlogerie, cette approche permet d'améliorer considérablement le rendement de l'échappement par rapport aux réalisations usuelles en diminuant le frottement. Par exemple, un échappement en silicium oxydé revêtu d'un matériau aux propriétés tribologiques intéressantes et adéquates, comme le carbone diamanté (DLC : Diamond Like Carbon), a un comportement tout à fait satisfaisant, avec un rendement augmenté.

La profondeur à laquelle se trouve la couche d'activation, électrisée ou/et magnétisée, la plus externe d'une des surfaces de coopération, est de préférence faible, typiquement comprise entre 0,1 et 5 µm, de façon à ce que la force soit efficace, cette profondeur devant être suffisante pour qu'une couche tribologique persiste suite à l'usure naturelle.

Cette couche mince est d'épaisseur inférieure à 100 µm, et de préférence entre 0,1 et 20 µm. Naturellement, le total des épaisseurs des couches minces entre les deux composants antagonistes doit rester compatible avec la cinématique, et ne pas dépasser le jeu fonctionnel entre eux, et, de préférence, rester inférieur à la moitié de la valeur de ce jeu dans les conditions les plus défavorables.

L'étendue en surface de la couche dépend naturellement du composant sur lequel le traitement est fait et du type de dépôt. Selon le cas la couche peut être séparée avantageusement en îlots. Par exemple pour un système de polysilicium enterré, il peut être judicieux de séparer latéralement les réservoirs de charge que sont ses îlots de polysilicium pour améliorer le rendement au cas où une partie de ces réservoirs fuiraient (perte de charge). Pour des applications horlogères, des valeurs de la plus grande dimension de l'étendue en surface de la couche d'activation, ou, quand cette couche est ainsi séparée en îlots la plus grande dimension des îlots, est de préférence comprise entre 0,01 mm et 1 mm. En effet, des dimensions de ces îlots comprises entre 0,01 mm et plusieurs millimètres sont en général adéquates, sachant que naturellement la force de répulsion est proportionnelle à l'étendue de la surface concernée.

Le matériau de base du composant, sur lequel est appliquée la couche mince électrisée ou/et magnétisée, elle-même possiblement protégée par une couche périphérique tribologique, peut être, pour les applications horlogères, un des matériaux utilisés ou en développement pour cette industrie : silicium monocristallin, quartz monocristallin, polysilicium, métaux, alliages métalliques, céramiques, plastiques, verres, matériaux amorphes, métal amorphe, « LIGA », cette liste n'étant nullement limitative.

La couche mince peut être disposée localement sur un composant, par exemple dans le cas de l'électret, afin d'améliorer la durée de vie du produit.

Dans une réalisation magnétique voisine de l'invention, la force de répulsion magnétique peut aussi exister si un des deux composants antagonistes est dans un état diamagnétique, et si seul l'autre de ces deux composants antagonistes comporte au moins une couche aimantée. Le procédé de réalisation d'une transmission à contact atténué ou sans contact dans un mouvement d'horlogerie est alors caractérisé en ce qu'on réalise ou qu'on transforme au moins un couple de surfaces antagonistes dudit mouvement d'horlogerie, dont l'une entraîne l'autre ou prend appui sur l'autre, par l'application d'un traitement superficiel ou dans la masse conférant une charge magnétique à une des surfaces antagonistes dites de coopération, l'autre de ces surfaces antagonistes étant dans un état diamagnétique, de façon à ce que lesdits composants antagonistes tendent à se repousser quand ils sont approchés l'un de l'autre.

Dans une réalisation particulière, on charge une couche de polysilicium enterrée dans de l'oxyde, de manière similaire aux mémoires électroniques type EEPROM.

L'invention est conçue de préférence pour s'appliquer à un couple de composants antagonistes. Une réalisation voisine de l'invention est aussi applicable, en ce qui concerne la nature du traitement en couche mince électrisée ou magnétisée, à un seul composant isolé, qui coopère avec une pièce antagoniste laquelle ne reçoit pas ce même traitement en couche mince électrisée ou magnétisée, mais qui est plus classiquement électrisée dans sa masse, ou parcourue par un courant électrique, ou qui est magnétisée dans sa masse, ou qui est sous l'influence d'un champ magnétique généré par un aimant ou par un courant électrique.

Par exemple ce cas de figure peut concerner davantage un axe ou un arbre, auquel on applique le procédé de traitement en couche mince électrisée selon l'invention, ou magnétisée dans une réalisation voisine de l'invention, et qui coopère avec une pièce massive telle qu'une platine ou un pont, soumise à un potentiel électrique ou/et à une aimantation. De façon préférée, dans une pièce d'horlogerie dont de nombreux composants sont sensibles aux champs magnétiques qui perturbent la marche et la régularité du mouvement, il est alors préféré de donner à la pièce massive une polarité électrique plutôt que magnétique, et donc de choisir pour l'axe ou l'arbre considéré un traitement en couche mince électrisée.

L'application de l'invention à des couples arbres-alésages est particulièrement intéressante, car elle permet, soit de s'affranchir des pivots, soit de les sous-dimensionner, en raison des très faibles efforts de contact résiduels grâce à l'invention. De nombreux mécanismes horlogers, qui comportent des usinages borgnes ou traversants, dans des composants en matière électromagnétique, peuvent être avantageusement transformés, sans modification de leur cotation, et polarisés ou/et magnétisés de façon à repousser des arbres de même polarisation ou magnétisation, aussi bien radialement qu'axialement en bout d'arbre, ce qui autorise un maintien en lévitation d'un arbre dans son logement.

De façon avantageuse, on réalise le composant ou le couple de composants comportant les surfaces antagonistes en matériau micro-usinable issu des technologies MEMS, ou en silicium ou en quartz, ou en un matériau réalisé selon le procédé « LIGA ». En effet, l'utilisation de ces matériaux est appréciée grâce à une inertie moindre que des aciers ou autres alliages, et, de plus, l'accrochage de couches minces selon l'invention est particulièrement approprié sur de tels matériaux-supports.

Dans une réalisation voisine de l'invention, on réalise des micro-aimants par photolithographie ou au sein d'une structure réalisée par photolithographie.

De façon particulière, on réalise ou on transforme au moins un tel couple de surfaces antagonistes de coopération d'un même composant ou d'un couple de composants antagonistes, par l'application d'un traitement superficiel sur une épaisseur inférieure ou égale à 20 µm.

L'invention apporte l'avantage de pouvoir conserver inchangé le dimensionnement initial de chaque composant, quand l'épaisseur de la couche mince est très faible, de préférence très inférieure à la valeur du jeu fonctionnel entre les surfaces ou les composants antagonistes. La mise en oeuvre de l'invention permet d'améliorer le rendement énergétique global du mouvement d'horlogerie, et permet, soit d'augmenter la réserve de marche de ce mouvement, soit d'adopter un dimensionnement inférieur du barillet ou des moyens de stockage d'énergie, afin d'obtenir un mouvement de moindre encombrement, en particulier dans l'application à une montre pour dame.

On comprend que, selon le dimensionnement des couches minces et selon le niveau de leur activation électrique ou/et magnétique, la transmission d'effort dans le mouvement, au niveau de chaque couple de composants antagonistes concernés, peut être réalisée, soit véritablement sans contact, ce qui représente le cas idéal, soit avec un contact très fortement minimisé par rapport au même mouvement, avec la même cinématique, et auquel n'aurait pas été appliqué le procédé selon l'invention. Dans tous les cas, un gain important en termes de frottement, d'énergie, d'usure, est réalisé grâce à l'invention.

Le phénomène de répulsion entre composants permet, encore, d'amortir certains chocs ou impacts, ce qui se traduit aussi par une moindre usure, et par une meilleure longévité du mouvement, et surtout par une constance de ses performances dans le temps.

Naturellement, les caractéristiques décrites ci-dessus sont applicables à la problématique inverse, quand, dans une réalisation voisine de l'invention, on cherche au contraire à attirer les surfaces antagonistes l'une vers l'autre. En particulier le rattrapage de jeux mécaniques dans des transmissions ou similaires peut être effectué en agençant les surfaces antagonistes pour s'attirer. Cette disposition peut être intéressante dans le cas où le fonctionnement d'un mécanisme requiert un impact, par exemple un marteau sur un coeur, un sautoir sur une étoile ou sur un disque de quantième, ou dans un mécanisme de sonnerie, ou similaire, et où, après cet impact, une force d'attraction crée par des électrets ou des surfaces aimantées permet de faire revenir les composants concernés en position, notamment sans jeu. Les applications concernent ainsi, de façon non limitative, le contrôle des jeux, des forces de frottement, des forces de friction dans certains mécanismes.

Bien entendu, la présente invention ne se limite pas à l'exemple illustré mais est susceptible de diverses variantes et modifications qui apparaîtront à l'homme de l'art.

## Revendications

1. Procédé de réalisation d'une transmission sans contact dans un mécanisme purement mécanique d'un mouvement d'horlogerie, **caractérisé en ce qu'**on réalise ou qu'on transforme au moins un couple de surfaces antagonistes de coopération d'un couple de composants antagonistes pivotants dudit mouvement d'horlogerie, dont l'une desdites surfaces est agencée pour entraîner l'autre, par l'application d'un traitement superficiel ou dans la masse sur chacune desdites surfaces antagonistes composant ledit couple pour lui conférer une charge électrostatique de même polarisation au niveau desdites surfaces antagonistes de coopération, de façon à ce que lesdites surfaces antagonistes tendent à se repousser quand elles sont approchées l'une de l'autre.

2. Procédé selon la revendication 1, **caractérisé en ce que**, quand on soumet ledit couple de surfaces antagonistes à un traitement superficiel, on recouvre chaque surface antagoniste d'au moins une couche mince d'activation, de particules chargées électriquement, de même polarisation l'une que l'autre, de façon à ce que ces surfaces antagonistes de coopération tendent à se repousser quand elles sont approchées l'une de l'autre, ou bien on crée au moins une telle couche mince d'activation

3. Procédé selon la revendication 1, **caractérisé en ce que**, quand on soumet ledit couple de surfaces antagonistes à un traitement dans la masse, on soumet une partie de la structure de chaque composant concerné à un traitement d'électrisation, au niveau d'au moins une couche mince d'activation, comportant après ce traitement des particules chargées électriquement, de même polarisation l'une que l'autre, de façon à ce que ces surfaces antagonistes de coopération tendent à se repousser quand elles sont approchées l'une de l'autre, ou bien on crée au moins une telle couche mince d'activation.

4. Procédé selon la revendication 1, **caractérisé en ce que** l'une des surfaces antagonistes est traitée en surface tandis que l'autre surface antagoniste est traitée dans la masse.

5. Procédé selon la revendication 1, **caractérisé en ce que** ledit traitement superficiel consiste à créer ou déposer sur chacune desdites surfaces antagonistes de coopération une pluralité de couches minces de particules chargées électriquement, deux à deux de même polarisation, de façon à ce que lesdites surfaces antagonistes de coopération tendent à se repousser quand elles sont approchées l'une de l'autre.

6. Procédé selon la revendication 1, **caractérisé en ce que** ledit traitement dans la masse consiste à soumettre une partie de la structure de chaque composant concerné à un traitement d'électrisation, au niveau d'une pluralité de couches minces, comportant après ce traitement des particules chargées électriquement, deux à deux de même polarisation, de façon à ce que lesdites surfaces antagonistes de coopération tendent à se repousser quand elles sont approchées l'une de l'autre.

7. Procédé selon l'une des revendications précédentes, **caractérisé en ce qu'**au moins une desdites surfaces antagonistes comporte une couche mince d'activation de particules chargées électriquement, et **en ce qu'**on active au moins une dite couche mince après déposition sur ladite surface de coopération de façon à lui conférer la polarisation requise.

8. Procédé selon l'une des revendications précédentes, **caractérisé en ce qu'**au moins une desdites surfaces antagonistes comporte au moins une couche mince d'activation de particules chargées électriquement, et **en ce qu'**au moins une dite couche mince soit un électret SiO₂ sur une base silicium.

9. Procédé selon l'une des revendications précédentes, **caractérisé en ce qu'**au moins une desdites surfaces antagonistes comporte au moins une couche mince d'activation de particules chargées électriquement, et **en ce que** ladite couche d'activation, électrisée, la plus externe d'une desdites surfaces de coopération, est située à une profondeur comprise entre 0,1 et 5 µm, sous une couche tribologique de surface.

10. Procédé selon l'une des revendications précédentes, **caractérisé en ce qu'**au moins une desdites surfaces antagonistes comporte au moins une couche mince d'activation de particules chargées électriquement, et **en ce que** la valeur de la plus grande dimension de l'étendue en surface de ladite couche d'activation, ou, quand ladite couche est séparée en îlots la plus grande dimension desdits îlots, est comprise entre 0,01 mm et 1 mm.

11. Procédé selon l'une des revendications précédentes, **caractérisé en ce qu'**au moins une desdites surfaces antagonistes comporte au moins une couche mince d'activation de particules chargées électriquement, et **en ce que** au moins une dite couche mince est d'épaisseur inférieure ou égale à 20 µm.

12. Procédé selon l'une des revendications précédentes, **caractérisé en ce qu'**au moins une desdites surfaces antagonistes comporte au moins une couche mince d'activation de particules chargées électriquement, et **en ce que** au moins une dite couche mince est agencée et activée par électrisation sous champ ou par implantations d'ions ou d'électrons ou par procédé « Corona », pour générer une densité surfacique de charge comprise entre 0,1 et 50 mC/m².

13. Procédé selon l'une des revendications précédentes, **caractérisé en ce qu'**au moins une desdites surfaces antagonistes comporte au moins une couche mince d'activation de particules chargées électriquement, et **en ce que** ladite couche d'activation est électrisée et constituée de SiO₂, ou de As₂ S₃, ou de polymères fluorés.

14. Procédé selon l'une des revendications précédentes, **caractérisé en ce qu'**au moins une desdites surfaces antagonistes comporte au moins une couche mince d'activation de particules chargées électriquement, et **en ce que** ladite couche d'activation est électrisée et que la charge électrostatique est mise dans une couche de polysilicium enterrée dans un isolant ou du SiO₂, sous forme d'îlots de taille arbitraire, selon un procédé photolithographique.

15. Procédé selon l'une des revendications précédentes, **caractérisé en ce qu'**on réalise ledit couple de composants comportant lesdites surfaces antagonistes en matériau micro-usinable issu des technologies MEMS, ou en silicium monocristallin ou en quartz monocristallin ou en polysilicium, ou en un matériau réalisé selon le procédé « LIGA ».

16. Procédé selon l'une des revendications précédentes, **caractérisé en ce qu'**on réalise ou on transforme au moins un dit couple de surfaces antagonistes de coopération d'un couple de composants antagonistes, par l'application d'un traitement superficiel sur une épaisseur inférieure ou égale à 20 µm.

## Patentansprüche

1. Verfahren zum Ausführen einer kontaktlosen Übertragung in einem rein mechanischen System eines Uhrwerks, **dadurch gekennzeichnet, dass** mindestens ein Paar entgegenwirkender Oberflächen eines Paars entgegenwirkender Drehkomponenten des Uhrwerks ausgebildet oder umgeformt wird, wobei eine der Oberflächen dafür ausgelegt ist, um die andere anzutreiben, durch Anwenden einer Oberflächenbearbeitung oder einer Bearbeitung in der Masse jeder der entgegenwirkenden Oberflächen, die das Paar bilden, um ihr eine elektrostatische Ladung derselben Polarisierung auf Höhe der entgegenwirkenden Oberflächen zu verleihen, derart, dass die entgegenwirkenden Oberflächen bestrebt sind, sich abzustoßen, wenn sie einander angenähert werden.

2. Verfahren nach Anspruch 1, **dadurch gekennzeichnet, dass** dann, wenn das Paar entgegenwirkender Oberflächen einer Oberflächenbearbeitung unterworfen wird, jede entgegenwirkende Oberfläche mit mindestens einer dünnen Aktivierungsschicht aus elektrisch geladenen Teilchen, die jeweils dieselbe Polarisierung besitzen, beschichtet wird, derart, dass diese entgegenwirkenden Oberflächen bestrebt sind, sich abzustoßen, wenn sie einander angenähert werden, oder dass mindestens eine solche dünne Aktivierungsschicht erzeugt wird.

3. Verfahren nach Anspruch 1, **dadurch gekennzeichnet, dass** dann, wenn das Paar entgegenwirkender Oberflächen einer Bearbeitung in der Masse unterworfen wird, ein Teil der Struktur jeder betreffenden Komponente einer Elektrisierungsbearbeitung auf Höhe mindestens einer dünnen Aktivierungsschicht unterworfen wird, der nach dieser Bearbeitung elektrisch geladene Partikel, die jeweils dieselbe Polarisierung besitzen, enthält, derart, dass diese entgegenwirkenden Oberflächen bestrebt sind, sich abzustoßen, wenn sie einander angenähert werden, oder dass mindestens eine solche dünne Aktivierungsschicht erzeugt wird.

4. Verfahren nach Anspruch 1, **dadurch gekennzeichnet, dass** eine der entgegenwirkenden Oberflächen in der Fläche bearbeitet wird, während die andere entgegenwirkende Oberfläche in der Masse bearbeitet wird.

5. Verfahren nach Anspruch 1, **dadurch gekennzeichnet, dass** die Oberflächenbehandlung darin besteht, auf jeder der entgegenwirkenden Oberflächen eine Mehrzahl von dünnen Schichten aus elektrisch geladenen Teilchen, die paarweise die gleiche Polarisierung besitzen, zu erzeugen oder abzulagern, derart, dass die entgegenwirkenden Oberflächen bestrebt sind, sich abzustoßen, wenn sie einander angenähert werden.

6. Verfahren nach Anspruch 1, **dadurch gekennzeichnet, dass** die Bearbeitung in der Masse darin besteht, einen Teil der Struktur jeder betreffenden Komponente einer Elektrifizierungsbearbeitung auf Höhe einer Mehrzahl von dünnen Schichten zu unterwerfen, der nach dieser Bearbeitung elektrisch geladene Teilchen, die paarweise die gleiche Polarisierung besitzen, enthält, derart, dass die entgegenwirkenden Oberflächen bestrebt sind, sich abzustoßen, wenn sie einander angenähert werden.

7. Verfahren nach einem der vorhergehenden Ansprüche, **dadurch gekennzeichnet, dass** mindestens eine der entgegenwirkenden Oberflächen eine dünne Aktivierungsschicht von elektrisch geladenen Teilchen aufweist und dass mindestens eine dünne Schicht nach der Ablagerung auf der Zusammenwirkungsoberfläche aktiviert wird, um ihr die geforderte PolarisierungPolarisierung zu verleihen.

8. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass mindestens eine dünne Schicht ein SiO₂-Elektret auf Siliziumbasis ist.

9. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass die elektrisierte Aktivierungsschicht, die sich am weitesten außerhalb von einer der Zusammenwirkungsoberflächen befindet, in einer Tiefe angeordnet ist, die im Bereich von 0,1 bis 5 µm unter einer tribologischen Oberflächenschicht liegt.

10. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass der Wert der größten Abmessung der Oberflächenausdehnung der Aktivierungsschicht oder, falls die Schicht in Inseln unterteilt ist, der größten Abmessung der Inseln im Bereich von 0,01 mm bis 1 mm liegt.

11. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass mindestens eine dünne Schicht eine Dicke, die kleiner oder gleich 20 µm ist, besitzt.

12. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass mindestens eine dünne Schicht durch Elektrisierung im Feld oder durch Implantation von Ionen oder Elektronen oder durch ein "Corona"-Verfahren angeordnet und aktiviert wird, um eine Oberflächenladungsdichte zu erzeugen, die im Bereich von 0,1 bis 50 mC/m² liegt.

13. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass die Aktivierungsschicht elektrisiert wird und aus SiO₂ oder As₂S₃ oder fluorierten Polymeren gebildet ist.

14. Verfahren nach einem der vorhergehenden Ansprüche, **dadurch gekennzeichnet, dass** mindestens eine der entgegenwirkenden Oberflächen mindestens eine dünne Aktivierungsschicht von elektrisch geladenen Teilchen aufweist und dass die Aktivierungsschicht elektrisiert wird und dass die elektrostatische Ladung in eine mit einem isolierenden Medium oder SiO₂ überdeckte Polysiliciumschicht eingebracht wird in Form von Inseln mit beliebiger Größe gemäß einem Photolithographieverfahren.

15. Verfahren nach einem der vorhergehenden Ansprüche, **dadurch gekennzeichnet, dass** das Paar von Komponenten, das die entgegenwirkenden Oberflächen aufweist, aus einem mikrobearbeitbaren Material, das aus MEMS-Technologien hervorgegangen ist, oder aus monokristallinem Silizium oder aus monokristallinem Quarz oder aus Polysilicium oder aus einem Material, das gemäß dem "LIGA"-Verfahren gebildet wird, hergestellt wird.

16. Verfahren nach einem der vorhergehenden Ansprüche, **dadurch gekennzeichnet, dass** mindestens ein Paar entgegenwirkender Oberflächen eines Paars entgegenwirkender Komponenten durch Anwenden einer Oberflächenbearbeitung in einer Dicke, die kleiner oder gleich 20 µm ist, gebildet oder umgeformt wird.

## Claims

1. Method of making a contactless transmission in a purely mechanical mechanism of a timepiece movement, **characterized in that** at least one pair of opposing cooperating surfaces of a pair of pivoting opposite components of said timepiece movement is made or transformed, wherein one of said surfaces is arranged to drive the other, by applying a surface or bulk treatment to each one of said opposing surfaces forming said pair to confer thereon an electrostatic charge of the same polarisation on said opposing cooperating surfaces, such that said opposing surfaces tend to repel each other when they are moved closer to each other.

2. Method according to claim 1, **characterized in that** when said pair of opposing surfaces is subjected to a surface treatment, each opposing surface is coated with at least one thin activation layer, of electrically charged particles, of the same polarisation as each other, such that these opposing cooperating surfaces tend to repel each other when they are moved closer to each other, or at least one such thin activation layer is created.

3. Method according to claim 1, **characterized in that** when said pair of opposing surfaces is subjected to a bulk treatment, one part of the structure of each component concerned is subjected to an electrization treatment, on at least one thin activation layer, including, after said treatment of electrically charged particles, of the same polarisation as each other, such that these opposing cooperating surfaces tend to repel each other when they are moved closer together, or at least one such thin activation layer is created.

4. Method according to claim 1, **characterized in that** one of the opposing surfaces is surface treated while the other opposing surface is bulk treated.

5. Method according to claim 1, **characterized in that** said surface treatment consists in creating or depositing on each of said opposing cooperating layers a plurality of thin layers of electrically charged particles, in pairs with the same polarisation, such that said opposing cooperating surfaces tend to repel each other when they are moved closer to each other.

6. Method according to claim 1, **characterized in that** said bulk treatment consists in subjecting one part of the structure of each component concerned to an electrization treatment, on a plurality of thin layers, including, after this treatment, electrically charged particles, in pairs of the same polarisation, such that said opposing cooperating surfaces tend to repel each other when they are moved closer to each other.

7. Method according to one of the preceding claims, **characterized in that** at least one of said opposing surfaces includes at least one thin activation layer of electrically charged particles, and **in that** at least one said thin layer is activated after deposition on said cooperating surface to confer thereon the required polarisation.

8. Method according to one of the preceding claims, **characterized in that** at least one of said opposing surfaces includes at least one thin activation layer of electrically charged particles, and **in that** at least one said thin layer is a SiO₂ electret on a silicon base.

9. Method according to one of the preceding claims, **characterized in that** at least one of said opposing surfaces includes at least one thin activation layer of electrically charged particles, and **in that** said electrized activation layer, the outermost of one of said cooperating surfaces, is located at a depth of between 0.1 and 5 µm, underneath a tribological surface layer.

10. Method according to one of the preceding claims, **characterized in that** at least one of said opposing surfaces includes at least one thin activation layer of electrically charged particles, and **in that** the largest surface area dimension value of said activation layer or, when said layer is separated into islands, the largest dimension of said islands, is comprised between 0.01 mm and 1 mm.

11. Method according to one of the preceding claims, **characterized in that** at least one of said opposing surfaces includes at least one thin activation layer of electrically charged particles, and **in that** the thickness of at least one said thin layer is less than or equal to 20 µm.

12. Method according to one of the preceding claims, **characterized in that** at least one of said opposing surfaces includes at least one thin activation layer of electrically charged particles, and **in that** at least one said thin layer is arranged and activated by electrization by subjection to an electric field or by implanting ions or electrons, or by the "Corona" method, to generate a surface charge density of between 0.1 and 50 mC/m².

13. Method according to one of the preceding claims, **characterized in that** at least one of said opposing surfaces includes at least one thin activation layer of electrically charged particles, and **in that** said activation layer is electrized and formed of SiO₂ or As₂S₃, or fluoropolymers.

14. Method according to one of the preceding claims, **characterized in that** at least one of said opposing surfaces includes at least one thin activation layer of electrically charged particles, and **in that** at least one said activation layer is electrized and the electrostatic charge is placed in a polysilicon layer embedded in an insulator or SiO₂, in the form of islands of arbitrary size, according to a photolithographical method.

15. Method according to one of the preceding claims, **characterized in that** said pair of components including said opposing surfaces is made in micro-machinable material derived from MEMS technologies, or in single crystal silicon or single crystal quartz, or polysilicon, or a material fabricated via the LIGA method.

16. Method according to one of the preceding claims, **characterized in that** at least one said pair of opposing cooperating surfaces of a pair of opposing components are transformed or made by applying a surface treatment over a thickness of less than or equal to 20 µm.
